Europäisches Patentamt

European Patent Office (11) Numéro de publication: **0 191 679**

Office européen des brevets **B1**

(19)

(12) **FASCICULE DE BREVET EUROPEEN**

(45) Date de publication du fascicule du brevet: **22.08.90** (51) Int. Cl.⁵: **C 02 F 11/08**

(21) Numéro de dépôt: **86400161.5**

(22) Date de dépôt: **28.01.86**

(54) Procédé d'oxydation de substances dissoutes ou en suspension dans une solution aqueuse.

(30) Priorité: **04.02.85 FR 8501488**

(43) Date de publication de la demande:
**20.08.86 Bulletin 86/34**

(45) Mention de la délivrance du brevet:
**22.08.90 Bulletin 90/34**

(84) Etats contractants désignés:
**AT BE CH DE FR GB IT LI LU NL SE**

(56) Documents cités:
**FR-A-2 308 408**
**FR-A-2 440 918**
**US-A-3 607 735**
**US-A-3 696 929**

**Tableau de vapeur d'eau saturée de MOLLIER**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **Roussel, Jacques**
**Saint Germain**
**F-26390 Hauterives (FR)**
Inventeur: **Cochet, Xavier**
**No. 1, Résidence Cambois**
**F-13530 Trets (FR)**

(74) Mandataire: **Vesin, Jacques et al**
**L'AIR LIQUIDE, SOCIETE ANONYME POUR L'ETUDE ET L'EXPLOITATION DES PROCEDES GEORGES CLAUDE 75, quai d'Orsay**
**F-75321 Paris Cédex 07 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne un procédé d'oxydation de substances dissoutes ou en suspension dans une solution aqueuse, procédé dans lequel on injecte dans un réacteur tubulaire polyphasique, d'une part ladite solution à une température telle que la réaction d'oxydation s'effectue à une température supérieure à 50°C et à une pression absolue supérieure à 2 bars, d'autre part de l'oxygène gazeux à une pression légèrement supérieure à ladite pression de liquide et en ce que l'on recueille à la sortie dudit réacteur tubulaire la solution dans laquelle lesdites substances sont oxydées.

L'invention se rapporte plus particulièrement à l'oxydation humide c'est-à-dire l'oxydation de substances dissoutes ou en suspension dans une solution aqueuse telles que, par exemple, des sulfures, des thiosulfates, des sulfites, des phénols, des cyanures, des pesticides, etc.

Parmi les procédés d'oxydation humide utilisés jusqu'à présent, on peut citer le procédé dit "Procédé Zimpro" décrit dans l'article de A. R. WILHELM et P. V. KNOPP intitulé "Wet air oxidation" paru dans la revue CEP d'août 1979. Ce procédé consiste à réaliser l'oxydation des produits contenus dans la solution de départ à l'air, dans un autoclave, à une température comprise entre 180 et 310°C, la pression totale étant comprise entre 15 et 200 bars. Ce procédé présente l'inconvénient d'être extrêmement coûteux.

Un autre procédé d'oxydation d'effluents industriels contenant des sulfures et également d'oxydation de sulfites est décrit dans le brevet français FR—A—2 427 307; ce procédé consiste à oxyder la solution de départ à l'aide d'oxygène pur dans une colonne à bulles fonctionnant sous moyenne pression (1 à 10 bars) et à basse température (20°C à 80°C). Mais ce procédé présente l'inconvénient de ne pas permettre d'oxyder des substances beaucoup plus stables que des sulfures ou des sulfites, telles que par exemple des produits organiques halogénés.

Un autre des procédés d'oxydation humide utilisés jusqu'à présent est le procédé dit "Procédé Modar" décrit par exemple dans le brevet anglais 2.075.484. Selon ce procédé, on oxyde des produits organiques dissous ou en suspension dans une solution aqueuse portée à une température supérieure à la température critique de l'eau (374,2°C) à l'aide d'oxygène à une pression supérieure à sa pression critique (218,3 bars). Ce procédé permet d'obtenir une oxydation complète de façon rapide. Par contre, il présente l'inconvénient de nécessiter une technologie complexe compte tenu des hautes pressions et hautes températures auxquelles il s'effectue et, en conséquence, d'être très coûteux.

On a également décrit dans le brevet américain 3.696.929 un réacteur tubulaire comprenant plusieurs tronçons raccordées par des parties courbes avec des injecteurs d'air ou d'oxygène étagés le long de chaque tronçon à une pression comprise entre 2 et 20 bars et à une température de 50°C à 150°C.

On a également décrit dans A.I.C.H.E. Journal, vol. 10, No. 5, septembre 1964, New York (US) J. P. Anderson et al, article intitulé "Gas phase controlled mass transfer in two phases annular horizontal flow" pages 640—845, le principe de telles réactions.

Il est connu de brevet américain No. 3,607,735, un procédé de traitement des eaux usées à l'aide de bactéries dont la croissance est favorisée par l'introduction d'oxygène. Pour cela, on introduit à l'entrée d'un réacteur un mélange d'eaux usées, de boues contenant les bactéries et d'oxygène: lors du passage dans le réacteur, les bactéries agissent sur les eaux usées de manière à les traiter tandis que l'oxygène permet le développement et la croissance de nouvelles bactéries qui seront ensuite utilisées après décantation des boues dans un bassin de décantation placé à la sortie du réacteur. Un tel procédé ne concerne que les produits biodégradables d'une part, et nécessite un appareillage assez compliqué pour le recyclage des bactéries dans le réacteur.

Le problème actuellement posé à l'homme de métier est de réaliser un procédé qui soit à la fois rapide et économique. Or, ces deux exigences sont contradictoires pour ce procédé. En effet, si l'on veut oxyder rapidement une solution dans un réacteur polyphasique, la solution la plus simple consiste à réaliser une pluralité d'injections d'oxygène gazeux sous forte pression sur tout le parcours de la solution. Une telle solution est très onéreuse car le réacteur est compliqué, comportant de nombreuses canalisations d'oxygène gazeux, ce qui complique la distribution de celui-ci. De plus, l'injection d'oxygène gazeux sous forte pression nécessite un compresseur, appareil à la fois cher et consommateur d'énergie.

A priori, on pourrait penser qu'un procédé économique consisterait à mélanger l'oxygène et la solution dans le réacteur à une pression de l'ordre de la pression atmosphérique. Malheureusement on constate, dans un tel cas, d'une part qu'il est nécessaire d'avoir de très grandes longueurs de réacteurs et, d'autre part, que le taux d'utilisation de l'oxygène injecté est très faible (bien inférieur à 90%) si l'on veut atteindre un taux d'oxydation de l'ordre de 90%. Par conséquent, même un procédé dans lequel l'oxydation s'effectue lentement, n'est pas économique, compte tenu du prix de l'oxygène et de celui des canalisations constituant le réacteur, en particulier lorsque les produits sont corrosifs. Le procédé selon l'invention permet de répondre au problème posé: il s'agit d'un procédé d'oxydation de substances dissoutes ou en suspension dans une solution aqueuse qui est à la fois simple, rapide et économique, dans de bonnes conditions de sécurité (pas de risques l'explosion) et mettant en oeuvre un matériel simple et peu couteux.

Le procédé selon l'invention est caractérisé en ce que l'on procède à une injection unique à l'entrée du réacteur d'un mélange de ladite solution et de l'oxygène gazeux, à une pression pouvant aller jusqu'à 210 bars et à une température pouvant aller jusqu'à 370°C, l'injection de la solution s'effectuant à une vitesse superficielle un fût vide comprise entre 1 m/s et 10 m/s et l'injection de l'oxygène s'effectuant à une vitesse superficielle en fût vide comprise entre 0,01 m/s et 5 m/s, l'énergie spécifique due aux pertes de charge consommée par unité de volume du réacteur étant comprise entre 0,4 KW/m³ et 40 KW/m³, le taux d'oxydation des substances dissoutes étant supérieur ou égal à 90% tandis que le taux d'utilisation de l'oxygène au cours de la réaction d'oxydation est supérieur ou égal à 90%.

Par vitesse superficielle en fût vide d'un fluide introduit dans une conduite, on entend la vitesse moyenne que prendrait le fluide dans ladite conduite compte tenu de son débit massique et de sa masse spécifique en supposant que la conduite est "vide" (pas de garnissage et pas d'autres fluides).

Le fait que, selon l'invention, on effectue la réaction d'oxydation humide dans un réacteur tubulaire polyphasique permet d'obtenir une bonne dispersion de l'oxygène dans la solution. En choisissant une pression de fonctionnement assez élevée, mais toutefois inférieure à la pression critique (pas plus de 210 bars), on peut atteindre une grande vitesse de dissolution de l'oxygène dans la solution. De plus, en choisissant une température de fonctionnement telle que la réaction d'oxydation s'effectue à une température supérieure à 50°C, mais toutefois inférieure à la température critique (pas plus de 370°C), on obtient une grande vitesse de réaction. En outre, le choix des vitesses superficielles en fût vide d'injection de la solution et d'oxygène s'est avéré, par expérience, décisif pour l'économie du procédé. L'ensemble de ces caractéristiques combinées selon l'invention permet d'obtenir une oxydation quasiment totale des produits contenus dans la solution en un laps de temps assez court, et dans tous les cas supérieure ou égale à 90% pour un taux d'utilisation de l'oxygène supérieur ou égal à 90%. De plus, le procédé de l'invention présente cet avantage que, dans la réacteur tubulaire polyphasique utilisé, du fait de la dispersion considérable de l'oxygène dans la solution, il n'y a pas de risque d'inflammation ni d'explosion.

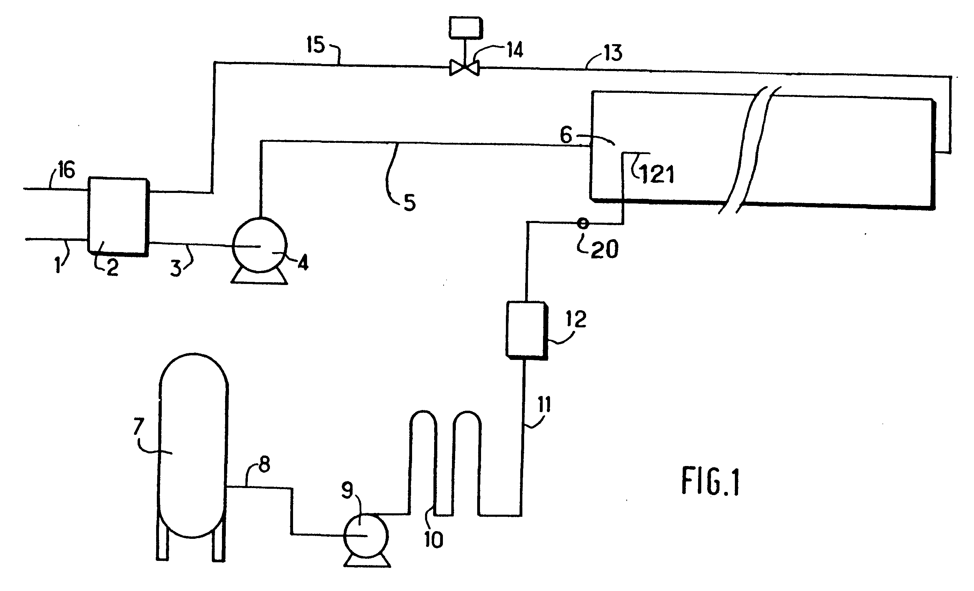

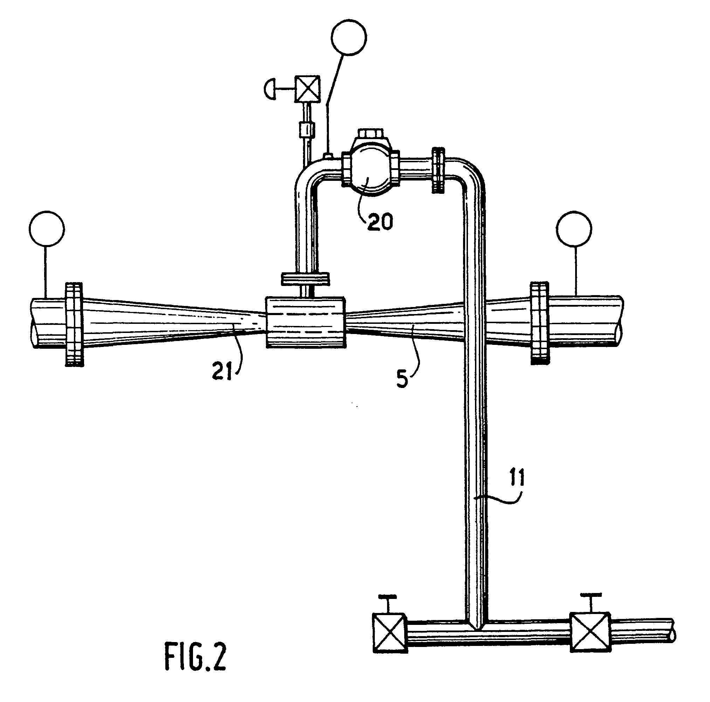

Les caractéristiques et avantages de l'invention seront mieux compris à la lecture de la description qui suit de deux exemples de réalisation du procédé considéré, donnés à titre non limitatif, en référence aux dessins annexés qui représentent schématiquement à la figure 1 une installation mettant en oeuvre le procédé selon l'invention et à la figure 2 un détail de cette installation.

Exemple 1

On cherche à oxyder les sulfures contenus dans une saumure ayant la composition suivante:

| | |
|---|---|
| —sulfate de sodium | 400 g/l |
| —sulfure de sodium | 6 g/l |
| —soude | 5 g/l |
| —polysulfures | 1 g/l |

Le débit de saumure à traiter est de 30 m³ par heure et sa température est, au départ, de 60°C.

On fait passer la saumure à traiter provenant du conduit 1 dans un échangeur de chaleur 2 dont elle ressort par le conduit 3 à une température de 85°C; on l'envoie alors par une pompe 4, à une pression absolue de 40 bars, par le conduit 5 à l'entrée d'un réacteur tubulaire polyphasique 6. Ce réacteur 6 est d'un type connu, tel que par exemple celui décrit dans l'article de l'Al.Ch.E. Journal de septembre 1964 "Gas Phase Controlled Mass Transfer in Two Phase Annular Horizontal Flow" par J-D. ANDERSON, R. E. BOLLINGER et D. E. LAMB.

Parallèlement, on prélève de l'oxygène liquide contenu dans un dispositif de stockage cryogénique 7 par un conduit 8 et on le comprime à l'état liquide à l'aide d'une pompe cryogénique 9 jusqu'à ce qu'il ait atteint la pression légèrement supérieure à la pression de la solution de façon à vaincre les pertes de charge. On fait passer ensuite l'oxygène liquide ainsi comprimé dans un réchauffeur 10 duquel il ressort à l'état gazeux, à une température voisine ou supérieure à la température ambiante. On l'envoie alors, par la conduite 11 munie d'un dispositif 12 de mesure et régulation du débit d'oxygène, à l'entrée du réacteur tubuliare 6 via un clapet antiretour 20 dans un Venturi 21 (fig. 2) ou dans un ajutage 121, placé au centre du réacteur 6, à l'entrée de celui-ci (fig. 1).

Compte tenu du débit (30 m³ par heure) de liquide à traiter, on utilise un réacteur tubulaire 6 qui présente un diamètre de 0,05 m et une longueur de 200 m. La vitesse de l'oxygène "en fût vide" est de 0,292 m/s, tandis que la vitesse d'injection en fût vide de la solution est de 4,24 m/s. La consommation spécifique d'énergie est de l'ordre de 11,3 KW par mètre cube de réacteur. Le débit d'oxygène gazeux dans le réacteur 6 est de 90 kg/h.

On récupère à la sortie du réacteur 6 par le conduit 13 la saumure dans laquelle tous les sulfures ont été oxydés en thiosulfates. Cette saumure oxydée sort par le conduit 13 à une pression de 35 bars et à une température de 95°C. Si on le désire, on peut la ramener à la pression atmosphérique à l'aide de la vanne de détente 14 et ensuite l'envoyer dans l'échangeur de chaleur 2 par le conduit 15 d'où elle ressort en 16 à une température de 70°C; ainsi, lors de son passage dans l'échangeur 2 elle réchauffe la saumure à traiter entrant par le conduit 1.

On constate que le rendement d'oxydation des sulfures de la saumure est supérieur à 95% et que le rendement d'utilisation de l'oxygène est au moins égal à 90%.

Exemple 2

On cherche à oxyder le sulfure de sodium contenu dans des liqueurs noires à une concentration de 3,75 g/l. Le débit de la solution à traiter est de 210 m³ par heure. On envoie cette liqueur noire à l'entrée du réacteur tubulaire 6 à une température de 95°C et à une pression absolue de 2,5 bars. Parallèlement en envoie de l'oxygène gazeux à l'entrée du réacteur 6 à un débit de 420 kg/h, à une pression légèrement supérieure à une pression absolue de 2,5 bars.

Compte tenu du débit de la solution à traiter (210 m³ par heure), on utilise un réacteur 6 dont le diamètre est de 0,2 m et la longueur de 100 m. La vitesse superficielle en fût vide de la solution est de 1,856 m/s tandis que celle de l'oxygène est de 1,4 m/s.

On récupère à la sortie du réacteur 6, par le conduit 13, une liqueur noire dans laquelle tout le sulfure de sodium est oxydé en thiosulfate et dont la température est de 99°C.

Le rendement global d'oxydation du sulfure de sodium est de 98% et le rendement d'utilisation de l'oxygène de 99%. La consommation spécifique est de 0,79 KW/m³.

Le procédé, objet de l'invention, est applicable à l'oxydation de produits minéraux ou organiques, dissous ou en suspension dans une solution aqueuse, telle que le traitement d'effluents pour la destruction chimique de polluants (sulfures, thiosulfates, sulfites, phénols, cyanures, pesticides, etc.), le traitement de fluides de travail recyclés dans une usine (régénération des eaux sodées des raffineries de pétrole, réoxygénation des eaux blanches de papeterie, etc.), la lixiviation oxydante de minerais.

Dans le procédé selon l'invention, l'oxygène gazeux est introduit à une pression légèrement supérieure à celle du liquide à triater. "Légèrement" signifie d'une manière générale que la pression de l'oxygène gazeux doit être suffisante pour qu'elle permette la pénétration de celui-ci dans le liquide.

**Revendications**

1. Procédé d'oxydation de substances dissoutes ou en suspension dans une solution aqueuse, procédé dans lequel on injecte dans un réacteur tubulaire polyphasique d'une part ladite solution à une température telle que la réaction d'oxydation s'effectue à une température supérieure à 50°C et à une pression absolue supérieure à 2 bars, d'autre part de l'oxygène gazeux à une pression légèrement supérieure à ladite pression de liquide et en ce que l'on recueille à la sortie dudit réacteur tubulaire la solution dans laquelle lesdites substances sont oxydées, caractérisé en ce qu'on procède à une injection unique et dans le même sens, à l'entrée du réacteur, de ladite solution et de l'oxygène gazeux, à une pression pouvant aller jusqu'à 210 bars et à une température pouvant aller jusqu'à 370°C, l'injection de la solution s'effectuant à une vitesse superficelle en fût vide comprise entre 1 m/s et 10 m/s et l'injection de l'oxygène s'effectuant à une vitesse superficielle en fût vide comprise entre 0,01 m/s et 5m/s, l'énergie spécifique due aux pertes de charge consommée par unité de volume du réacteur étant comprise entre 0,4 KW/m³ et 40 KW/m³, le taux d'oxydation des substances dissoutes étant supérieur ou égal à 90% tandis que le taux d'utilisation de l'oxygène au cours de la réaction d'oxydation est supérieur ou égal à 90%.

2. Procédé selon la revendication 1, caractérisé en ce que l'on utilise de l'oxygène liquide que l'on comprime à une pression légèrement supérieure à la pression de la solution injectée, puis on vaporise l'oxygène en le maintenant à cette pression avant de l'injecter dans le réacteur.

3. Procédé selon l'une des revendications 1 ou 2, caractérisé en ce que l'on préchauffe la solution à oxyder avant son entrée dans le réacteur à l'aide de la solution oxydée, récupérée à la sortie du réacteur.

**Patentansprüche**

1. Verfahren zum Oxidieren von in einer wäßrigen Lösung gelösten oder suspendierten Substanzes, nach welchem in einen rohrförmigen Mehrphasenreaktor einerseits die genannte Lösung bei einer solchen Temperatur eingespritzt wird, daß die Oxidationsreaktion bei einer über 50°C liegenden Temperatur und einem über 2 Bar liegenden Absolutdruck abläuft, und andererseits gasförmiger Sauerstoff bei einem etwas über dem genannten Flüssigkeitsdruck liegenden Druck eingespritzt wird, und nach welchem am Ausgang des rohrförmigen Reaktors die Lösung aufgefangen wird, in der die genannten Substanzen oxidiert sind, dadurch gekennzeichnet, daß am Eingang des Reaktors die genannte Lösung und gasförmiger Sauerstoff einzeln und in gleicher Richtung unter einem Druck bis zu 210 Bar und einer Temperatur bis zu 370°C eingespritzt werden, daß das Einspritzen der Lösung mit einer Oberflächengeschwindigkeit, unbehindert durch Auskleidungen oder andere Fluide ('im leeren Faß'), zwischen 1 m/s und 10 m/s und das Einspritzen des Sauerstoffs mit einer Oberflächengeschwindigkeit, unbehindert durch Auskleidungen oder andere Fluide ('im leeren Faß'), zwischen 0,01 m/s und 5 m/s abläuft, daß die infolge Druckverlusts verbrauchte spezifische Energie je Volumeneinheit des Reaktors zwischen 0,4 kW/m³ und 40 kW/m³ beträgt, und daß der Oxidationsgrad der gelösten Substanzen mindestens 90% beträgt, während der Nutzungsgrad des Sauerstoffs in der Oxidationsreaktion mindestens 90% beträgt.

2. Verfahren nach Anspruch 1, dadurch gekennzeichnet, daß flüssiger Sauerstoff verwendet wird, der auf einen etwas über dem Druck der eingespritzten Lösung liegenden Druck verdichtet wird, daß dann der Sauerstoff verdampft wird, wobei er auf diesem Durck gehalten wird, bevor er in den Reaktor eingespritzt wird.

3. Verfahren nach Anspruch 1 oder 2, dadurch gekennzeichnet, daß die zu oxidierende Lösung vor ihrem Eintritt in den Reaktor mit Hilfe der am Reaktorausgang zurückgewonnenen oxidierten Lösung vorgewärmt wird.

**Claims**

1. Process for oxidizing substances dissolved or in suspension in an aqueous solution, in which process there are injected into a polyphase tubular reactor, on the one hand, said solution at such temperature that the oxidation reaction occurs at a temperature higher than 50°C and at an absolute pressure higher than 2 bars and, on the other hand, gaseous oxygen at a pressure slightly higher than said liquid pressure, and the solution in which said substances are oxidized is collected at the outlet of said tubular reactor, characterized in that a single injection is effected in the same direction, at the inlet of the reactor, of said solution and gaseous oxygen, at a pressure which may be as much as 210 bars and a temperature which may be as much as 370°C, the injection of the solution being carried out at a surface velocity in an empty pipe of between 1 m/s and 20 m/s and the injection of the oxygen being carried out at a surface velocity in an empty pipe of between 0.01 20 m/s and 5 m/s, the specific energy due to pressure drops consumed per unit volume of the reactor being between 0.4 KW/M$^3$ and 40 KW/M$^3$, the rate of oxidation of the dissolved substances being higher than or equal to 90% while the rate of utilization of the oxygen in the course of the oxidation reaction is higher than or equal to 90%.

2. Process according to claim 1, characterised in that liquid oxygen is used, which is compressed to a pressure slightly higher than the pressure of the injected solution, and the oxygen is then vapourized while maintaining it at this pressure before injecting it into the reactor.

3. Process according to one of claims 1 or 2, characterised in that the solution to be oxidized is heated, before it enters the reactor, by means of the oxidized solution recovered at the outlet of the reactor.

FIG.1

FIG.2